Europäisches Patentamt

(19) European Patent Office

Office européen des brevets

(11) Publication number: **0 097 129**
**B1**

(12) EUROPEAN PATENT SPECIFICATION

(45) Date of publication of patent specification: **15.10.86**

(51) Int. Cl.⁴: **A 47 J 31/06**

(21) Application number: **83830108.3**

(22) Date of filing: **01.06.83**

(54) Percolator assembly supporting structure, particularly for domestic automatic coffee percolators.

(30) Priority: **11.06.82 IT 2182782**

(43) Date of publication of application:
**28.12.83 Bulletin 83/52**

(45) Publication of the grant of the patent:
**15.10.86 Bulletin 86/42**

(84) Designated Contracting States:
**AT BE CH DE FR GB LI NL SE**

(56) References cited:
**FR-A-2 132 005**
**FR-A-2 142 885**
**NL-A-6 709 182**

(73) Proprietor: **Cavalli, Alfredo**
**Via Galileo Galilei 9**
**I-20060 Pessano con Bornago (Milano) (IT)**

(72) Inventor: **Cavalli, Alfredo**
**Via Galileo Galilei 9**
**I-20060 Pessano con Bornago (Milano) (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Courier Press, Leamington Spa, England.

## Description

The present invention relates to a percolator assembly bearing or supporting structure, specifically designed for automatic coffee percolators for home use.

As is well known, domestic automatic coffee percolators are provided with a percolator assembly holder, which comprises a vessel member having a gripping handle, in the inside of which it is possible to house the percolator cups.

Moreover the mentioned automatic coffee percolators are provided with a percolator for preparing two cups of coffee and a percolator for preparing a single cup of coffee, thereby the user is compelled to introduce into the machine the percolator suitable for the number of cups of coffee to be made.

That requirement, while being a simple operation, is however a rather tedious task, particularly in those cases when a plurality of cups of coffee is to be prepared, owing to the fact that the percolators are heated, thereby the removing thereof from the vessel may be difficult.

Another drawback of the presently available solutions is that the coffee powder, being suitably pressed, may be removed only with difficulty from the percolator body, with tedious manual operations.

FR—A—2 142 885 shows a percolator assembly including a coffee powder supporting grille movable in the percolator body and biassed by a spring. More specifically a lever is provided associated with a stem rigid with the grille and encompassed by the spring: as the lever is operated upwardly or anticlockwise the grille is lowered in such a way as to define a fixed volume for receiving the powder coffee, whereas, as the lever is released the spring extends and causes the grille to raise thereby pressing the coffee powder. In such a percolator, specifically designed for *pressing* the coffee powder, there are not defined two precise metering volumes and, in addition, as the mentioned lever is released with the percolator removed from the coffee making apparatus the coffee powder is abruptly expelled, which represents a drawback since the exhausted coffee powder may drop on the floor.

On the other hand, from NL—A—6709182 there is known a percolator in which a lever is provided, associated with the powder coffee supporting grille, effective to assume discrete positions in order to *press* a definite coffee amount or volume, to obtain a coffee infusion more or less "strong". Thus this Patent Application does not address the problem of providing two different doses of coffee powder as required for preparing one or two cups of coffee.

Accordingly, the task of the present invention is to overcome the above mentioned drawbacks, by providing such a new percolator assembly supporting structure, particularly for domestic automatic coffee percolators, which, while being effective to eliminate said drawbacks, affords the possibility of preparing either one or two or more cups of coffee, without the need of replacing the percolator member.

Within that task, it is a main object of the present invention to provide such a percolator assembly supporting structure affording the possibility of completely removing the used coffee powder in a well controlled manner, without the need of carrying out tedious and difficult cleaning operations.

Yet another object of the present invention is to provide such a percolator assembly supporting structure which, while having greatly improved characteristics with respect to the known prior art, is of a size and shape substantially equal to the conventional ones, whereby it may be fitted to existing automatic coffee percolators for home use.

According to one aspect of the present invention, the thereinabove mentioned task and objects, as well as yet other objects, which will become more apparent thereinafter, are achieved by a percolator assembly supporting structure, particularly for domestic automatic coffee percolators, comprising a coffee powder containing body, effective to be coupled to a water dispensing unit and provided, at the bottom thereof, with coffee metering spouts, said containing body including a coffee powder supporting grille movable therein by means operated from the outside of the percolator assembly supporting structure, characterized in that said grille can be moved to at least three pre-defined positions, that is a first position whereat the capacity of the body above the grille corresponds to a coffee powder amount sufficient for preparing two cups of coffee, a second position whereat the capacity of the body above the grille corresponds to a coffee powder amount sufficient for preparing a single cup of coffee, and a third position whereat said grille is located substantially flush with the free upper edge of said body in order to remove therefrom the spent coffee powder.

Further characteristics and advantages of the invention will become more apparent hereinafter from the following detailed description of a preferred though not exclusive embodiment of a percolator assembly supporting structure, particularly for automatic coffee percolators for home use, according to the present invention, being illustrated by way of a non-limitative example in the accompanying drawings, wherein:

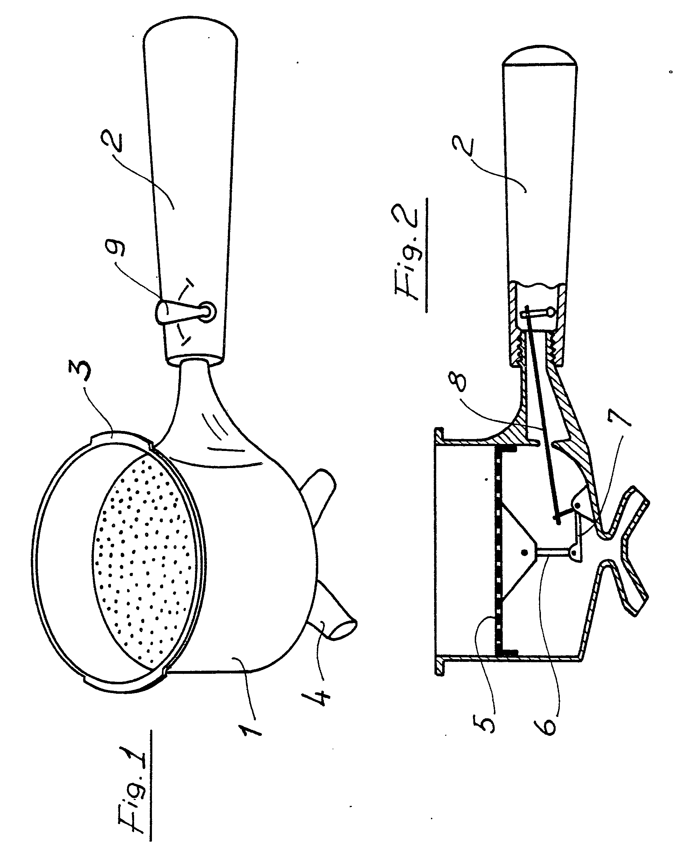

fig. 1 is a schematic perspective view illustrating the percolator assembly supporting structure according to the present invention;

fig. 2 is a schematic partially brokwn away view illustrating the percolator assembly and the coffee powder supporting grille as arranged for dispensing a single cup of coffee;

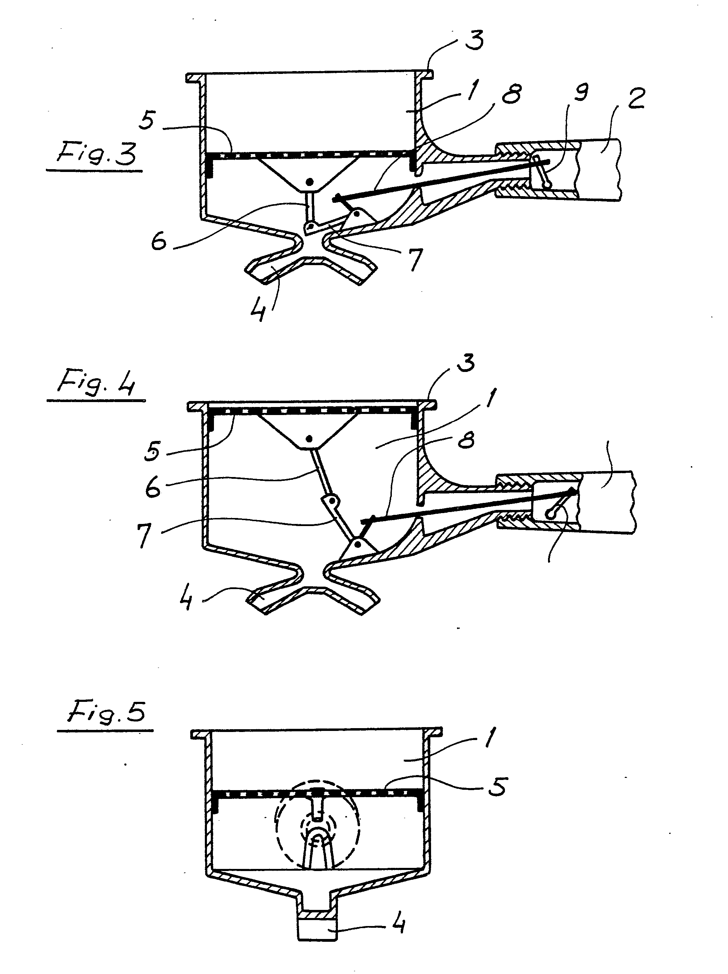

fig. 3 is a partially cut away view, illustrating the mentioned grille as arranged for dispensing two cups of coffee;

fig. 4 illustrates the position assumed by the coffee powder supporting grille in order to expel the spent coffee powder;

fig. 5 is a cross-sectional side view illustrating the percolator assembly supporting structure.

With reference to the above mentioned figures, the percolator assembly supporting structure, particularly for domestic automatic coffee percolators, according to the present invention, comprises a containing body or vessel 1 which, as it is conventional, is provided with a handle member 2, radially extending from said body.

At the top thereof, the body 1 is provided with bayonet coupling members 3, for coupling said body to the water metering unit of a domestic automatic coffee percolator, whereas, at the bottom thereof, it is provided with a coffee dispensing spout pair, indicated at 4.

A main feature of the present invention is that, inside the mentioned obtaining body or vessel 1, there is provided a grille 5, effective to support the coffee powder, which grille may be displaced inside said body and located at different levels therein, in such a way as to vary the coffee containing capacity of said body and afford the possibility of easily removing the spent coffee powder therefrom.

According to a preferred embodiment, which is illustrated in the accompanying drawings, the grille 5 is coupled, at the bottom thereof, to a rod member 6, in turn hinged on a rocker member 7, which latter is coupled to the inside of the body 1 and driven by a link 8, the operating lever 9 thereof is advantageously flush with the handle 2.

In this embodiment, the lever 9 may be operated in such a way as to locate the grille 5 at a first position, whereat the capacity of the body 1 corresponds to an amount of coffee sufficient for preparing two cups of coffee, at a second position whereat the capacity of the containing body or vessel 1 corresponds to an amount of coffee sufficient for preparing a single cup of coffee, and at a third position whereat, the grille 5 is substantially flush with respect to the body 1 edge, in order to facilitate the removing of the spent coffee powder.

Thus, in the disclosed embodiment, three positions may be assumed by the grille 5.

It should be noted in that connection that the lever 9, instead of having locking positions at the single mentioned positions of the grille 5, may be locked in several positions thereof or it may be so designed as to allow for the grille 5 to be arranged at any suitable positions, thereby providing the user with the possibility of varying, in a continuous manner, and depending on his/her requirements, the location of the grille 5.

Obviously, instead of using the illustrated rocker — link assembly for displacing the grille 5, the latter may be displaced by other suitable means, for example screw members accessible from the outside of the containing body and engaging with the grille 5 in such a way as to change at will the position thereof.

Thus, the means for varying the location of the grille 5 inside the body 1 may be selected in a very board range, without departing from the idea of having a movable grille in the inside of the containing body 1, in such a way as to vary the coffee powder containing capacity of the latter, without the need of replacing any percolators, as in the prior art approaches.

Moreover, though the lever 9 has been shown as arranged on the handle 2 of the percolator assembly supporting structure, it should be apparent that the driving or operating member may be located at any suitable positions.

From the above disclosure it should be noted that the invention fully achieves the intended task and objects.

In particular, the fact should be pointed out that the provision of a coffee powder supporting grille, which is movable in the inside of the body or vessel 1, affords the possibility of having a greatly flexible and practical percolator supporting structure, and moveover, of easily expelling the spent coffee powder.

Furthermore, another main feature of the invention, is that it provides the user with the possibility of adjusting at will the coffee powder capacity of the percolator assembly and, accordingly, of varying the coffee dose to be introduced.

**Claims**

1. A percolator assembly supporting structure, particularly for domestic automatic coffee percolators, comprising a coffee powder containing body (1), effective to be coupled to a water dispensing unit and provided, at the bottom thereof, with coffee metering spouts (4), said containing body including a coffee powder supporting grille (5) movable therein by means (6) operated from the outside of the percolator assembly supporting structure, characterized in that said grille (5) can be moved to at least three pre-defined positions, that is a first position whereat the capacity of the body above the grille corresponds to a coffee powder amount sufficient for preparing two cups of coffee, a second position whereat the capacity of the body above the grille corresponds to a coffee powder amount sufficient for preparing a single cup of coffee, and a third position whereat said grille is located substantially flush with the free upper edge of said body in order to remove therefrom the spent coffee powder.

2. A percolator assembly supporting structure according to claim 1, characterized in that said grille moving means (6) consist of a rod member (6) articulated to said grille (5) and to a rocker lever (7) articulated, at a middle portion thereof, to said containing body (1) and, at the other end thereof, to a link (8) coupled to an operating lever (9) flush with the operating handle (2) of said containing body (1).

3. A percolator assembly supporting structure according to claim 1 wherein the means for moving the grille comprises screw means.

**Patentansprüche**

1. Halterungsstruktur für Perkolatoraggregate, insbesondere für automatische Hauskaffeeperkolatoren, mit einem Kaffeepulver-Aufnahmekörper (1), welcher zum Anschließen en einer Wasserabgabeeinheit dient und unten mit Kaffeezuteilungsschnabeln (4) versehen ist, wobei der Aufnahmekörper ein Kaffeepulvertraggitter (5) aufweist, das in diesem durch von der Außenseite der Halterungsstruktur für Perkolatoraggregate betätigte Einrichtungen (6) bewegbar ist, dadurch gekennzeichnet, daß das Gritter (5) in mindestens drei vorgegebene Stellungen, und zwar eine erste Stellung, bei welcher das Fassungvermögen des Aufnahmekörpers oberhalb des Gitters jener Menge Kaffeepulver entspricht, welche zur Zubereitung von zwei Tassen Kaffee ausreichend ist, eine zweite Stellung, bei welcher das Fassungvermögen oberhalb des Gitters jener Menge Kaffeepulver entspricht, welche zur Zubereitung einer einzigen Tasse Kaffee ausreichend ist, und eine dritte Stellung, bei welcher das Gitter zum Zweck der Entfernung des erschöpften Kaffeepulvers vom Aufnahmekörper im wesentlichen mit dessen freien oberen Rand fluchtgerecht ist, gebracht werden kann.

2. Halterungsstruktur für Perkolatoraggregate, nach Anspruch 1, dadurch gekennzeichnet, daß die Gittertreibeinrichtungen (6) aus einem Wellenelement (6) bestehen, welches am Gitter (5) und an einem Schwinghebel (7) angelenkt ist, welcher seinerseits mit einem mittleren Abschnitt am Aufnahmekörper (1) und mit seinem anderen Ende an einem Verbindungsstück (8) angelenkt ist, wobei das Verbindungsstück mit einem mit dem Handgriff (2) des Aufnahmekörpers (1) fluchtgerecht angeordneten Betätigungshebel (9) gekoppelt ist.

3. Halterungsstruktur für Perkolatoraggregate, nach Anspruch 1, dadurch gekennzeichnet, daß die Gittertriebeinrichtungen Schraubeinrichtungen aufweisen.

## Revendications

1. Structure de support d'une unité à filtre, particulièrement pour des machines à café domestiques, comprenant un corps (1) apte à contenir la poudre de café, apte à être relié à une unité d'érogation d'eau et pourvu, en correspondance de son fond, de petits becs (4) pour l'érogation de l'infusion de café, ledit corps comprenant une grille (5) de support de la poudre de café apte à être déplacée dans l'interieur dudit corps par des moyens actionnées par l'extérieur de la structure de support de l'unité de filtre, caractérisée en ce que ladite grille peut être déplacée au au moins trois positions prédéfinies, c'est à dire une première position dans laquelle le capacité du corps au-dessus de la grille correspond à une quantité de poudre de café sufisante pour la preparation de deux tasses de café, une deuxième position dans laquelle la capacité du corps au dessus de la grille correspond à une quantite de poudre de café sufisante pour la préparation d'une tasse de café unique, et une troisième position pour laquelle ladite grille est disposée sensiblement à niveau avec le bord libre supérieure dudit corps pour enlever de ce dernier la poudre de café usée.

2. Structure de support d'une unité à filtre selon la revendication 1, caractérisée en ce que lesdites moyens (6) pour déplacer la grille sont formés par un élément à tige (6) articulé à ladite grille (5) et avec un levier oscillant (7) articulé, en correspondance d'une partie intermédiaire, audit corps (1) et, en correspondance de l'autre extrémité, avec un élément de connexion articulée (8) relié avec un levier d'actionnement (9) disposé à niveau avec le poignée d'actionnement (2) dudit corps.

3. Structure de support d'une unité à filtre selon la revendication 1, dans laquelle les moyens pour déplacer la grille comprennent des moyens à vis.

Fig. 1

Fig. 2

*Fig.3*

*Fig.4*

*Fig.5*